# EUROPEAN PATENT APPLICATION

(11) **EP 4 825 583 A1**
(43) Date of publication of application: **21.10.2026**
(21) Application number: 25820293.6
(22) Date of filing: 05.06.2025
(51) Int. Cl.: B32B 27/28, B32B 27/18, B32B 38/00, H01M 50/105, H01M 50/126, H01M 50/131

(54) **FIREPROOF PAD, METHOD FOR MANUFACTURING SAME, AND SECONDARY BATTERY**

(30) Priority: 07.06.2024 KR 20240074277; 04.06.2025 KR 20250072846
(71) Applicant: LG Energy Solution, Ltd., Seoul 07335 (KR)
(72) Inventor: JEONG, Jaehoon, Daejeon 34122 (KR); LEE, Jegwon, Daejeon 34122 (KR)
(74) Representative: Plasseraud IP
(86) International application number: PCT/KR2025/007674
(87) International publication number: WO 2025/254459

(57) **Abstract**

A fire-resistant pad of the present disclosure comprises: a first layer comprising a non-combustible material; a second layer comprising a carbonate-based flame retardant and a silicone resin; and a third layer comprising a silicone-aerogel composite containing a silicone resin and an aerogel, wherein the silicone-aerogel composite contains an aerogel in an amount of 0.5 wt.% or more and 40 wt.% or less and a silicone in an amount of 60 wt.% or more and 99.5 wt.% or less, based on the total weight of the third layer, and each of the first layer, the second layer, and the third layer is laminated in at least one or more layers.

## Description

### TECHNICAL FIELD

### Cross-Reference to Related Application(s)

This application claims priority to and the benefit of Korean Patent Application No. 10-2024-0074277, filed on June 7, 2024, and Korean Patent Application No. 10-2025-0072846, filed on June 4, 2025, the disclosures of which are hereby incorporated by reference in their entirety.

The present disclosure relates to a fire-resistant pad, a manufacturing method of the same and a secondary battery, and more particularly, to a fire-resistant pad comprising a flame-retardant layer, a manufacturing method of the same and a secondary battery.

### BACKGROUND

With advances in technological development and increasing demand for a mobile device, demand for a secondary battery as an energy source is also rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

A battery cell of a secondary battery is produced by incorporating an electrode assembly together with an electrolyte in a secondary battery case, and the electrode assembly is produced by laminating and/or winding a positive electrode, a separator, and a negative electrode. The produced battery cells are laminated in a plurality of numbers to form a battery module or a battery pack.

By the drive of the cell, heat may be generated in a battery cell, and if the heat is transferred to adjacent battery cells and accumulated, battery thermal propagation may occur.

Battery thermal runaway interruption is extremely crucial for the safety of electric vehicle batteries, and research into matters connected therewith is being conducted considerably. Currently in industry, silicone or polyurethane materials are placed between battery cells and utilized as fire-resistant pads, however, these materials are insufficient in preventing the extremely high-temperature flames formed during battery thermal runaway. Therefore, research on fire-resistant pads with superior fire resistance and their manufacturing methods is ongoing.

### DETAILED DESCRIPTION OF THE INVENTION

### Technical Problem

The present disclosure provides a fire-resistant pad that comprises a flame-retardant layer and thus provides improved flame retardancy and thermal insulation effects, and a method for manufacturing the same.

Further, the present disclosure provides a secondary battery that comprises the fire-resistant pad and thus can effectively interrupt heat transfer or thermal runaway between unit cells.

### Technical Solution

In an aspect of the present disclosure, there is provided a fire-resistant pad comprising: a first layer comprising a non-combustible material; a second layer comprising a carbonate-based flame retardant and a silicone resin; and a third layer comprising a silicone-aerogel composite containing a silicone resin and an aerogel, wherein the silicone-aerogel composite contains an aerogel in an amount of 0.5 wt.% or more and 40 wt.% or less, based on the total weight of the third layer.

In an embodiment, the silicone-aerogel composite may comprise a silicone resin in an amount of 60 wt.% or more and 99.5 wt.% or less, based on the total weight of the third layer. In a more specific embodiment, the silicone-aerogel composite may comprise 15 wt.% or more and 30 wt.% or less of aerogel and 70 wt.% or more and 85 wt.% or less of a silicone resin, based on the total weight of the third layer.

In an embodiment, the flame retardant may comprise an alkali metal or alkaline earth metal carbonate. Specific examples of the flame retardant may include at least one selected from the group consisting of X₂CO₃ (X=Na, K, Rb, Cs), XHCO₃ (X=Na, K, Rb, Cs), YCO₃ (Y=Be, Mg, Ca, Sr, Ba), and Y(HCO₃)₂ (Y=Be, Mg, Ca, Sr, Ba).

In an embodiment, the non-combustible material may refer to an inorganic material or the like that does not combust at all temperatures to which the fire-resistant pad or the secondary battery including the fire-resistant pad is exposed, for example, at a temperature of 1000°C or less or a temperature of 800°C or less under atmospheric pressure. The non-combustible material may be at least one selected from the group consisting of ceramic paper, ceramic wool, mica sheet, and glass fiber.

In an embodiment, the first layer, the second layer, and the third layer may be laminated in this order.

In an embodiment, the second layer, the first layer, and the third layer may be laminated in this order.

In an embodiment, the first layer, the second layer, the third layer, the second layer, and the first layer may be laminated in this order.

In an embodiment, the second layer, the first layer, the third layer, the first layer, and the second layer may be laminated in this order.

In an embodiment, the first layer, the third layer, the second layer, the third layer, and the first layer may be laminated in this order.

In an embodiment, the second layer, the third layer, the first layer, the third layer, and the second layer may be laminated in this order.

In an embodiment, the thickness of each of the first layer, the second layer, and the third layer may be 0.1 mm or more and 5 mm or less.

In another aspect of the present disclosure, there is provided a method for manufacturing a fire-resistant pad, the method comprising: forming a first layer comprising a non-combustible material; forming a preliminary second layer comprising a carbonate-based flame retardant and a silicone resin; mixing a liquid solvent-free silicone resin and aerogel particles to form a solid silicone-aerogel composite and forming a preliminary third layer comprising the silicone-aerogel composite; laminating each of the first layer, the preliminary second layer, and the preliminary third layer in at least one or more layers; and curing the preliminary second layer and the preliminary third layer to form a second layer and a third layer, respectively.

In an embodiment, in the step of curing the preliminary second layer and the preliminary third layer to form a second layer and a third layer, respectively, the laminated preliminary second layer and the preliminary third layer may be cured simultaneously.

In an embodiment, the step of curing the preliminary second layer and the preliminary third layer to form a second layer and a third layer, respectively, may be performed before the laminating step.

In this case, in the curing the preliminary second layer and the preliminary third layer to form a second layer and a third layer, respectively, the preliminary second layer and the preliminary third layer may be cured at different time points.

In yet another aspect of the present disclosure, there is provided a secondary battery comprising: a plurality of unit cells; and a fire-resistant pad according the embodiment formed between mutually adjacent unit cells.

### Advantageous Effects

The fire-resistant pad of the present disclosure comprises a first layer comprising a non-combustible material, a second layer comprising a flame retardant, and a third layer comprising a silicone-aerogel, and therefore exhibits excellent non-combustibility, flame retardancy, and thermal insulation properties.

The method for manufacturing a fire-resistant pad of the present disclosure provides a method for manufacturing a fire-resistant pad with high process efficiency and excellent fire resistance.

### BRIEF DESCRIPTION OF THE DRAWINGS

FIGS. 1 to 6 each show cross-sectional views of a fire-resistant pad according to an embodiment.
FIGS. 7 to 19 each schematically illustrate one step of a method for manufacturing a fire-resistant pad according to an embodiment.
FIG. 20 is a photograph and schematic diagram of an apparatus for evaluating and measuring the heat transfer suppression properties of a fire-resistant pad according to an embodiment of the disclosure.

### DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Now, a fire-resistant pad and a manufacturing method of the same according to the present disclosure will be described.

A fire-resistant pad of the present disclosure comprises:
a first layer comprising a non-combustible material;
a second layer comprising a carbonate-based flame retardant and a silicone resin; and
a third layer comprising a silicone-aerogel composite containing a silicone resin and an aerogel,
wherein the silicone-aerogel composite contains an aerogel in an amount of 0.5 wt.% or more and 40 wt.% or less, based on the total weight of the third layer.

In a specific embodiment, the silicone-aerogel composite may contain a silicone resin in an amount of 60 wt.% or more and 99.5 wt.% or less, based on the total weight of the third layer.

The fire-resistant pad of the present disclosure comprises a first layer, a second layer, and a third layer, wherein each of the first layer, the second layer and the third layer has a structure laminated in at least one or more layers. That is, in an embodiment, each of the first layer, the second layer, and the third layer may be present in one or more layers, or in another embodiment, any one of the first layer, the second layer, and the third layer may be present in two or more layers.

The first layer includes a non-combustible material. The non-combustible material may refer to, for example, an inorganic material or the like that does not combust at all temperatures to which the fire-resistant pad or the secondary battery including the same is exposed, for example, at a temperature of 1000°C or less or a temperature of 800°C or less under atmospheric pressure. The non-combustible material may be at least one selected from the group consisting of ceramic paper, ceramic wool, mica sheet, and glass fiber. The first layer may include a non-combustible material and thus exhibit a flame retardant effect.

The second layer includes a carbonate-based flame retardant and a silicone resin. The carbonate-based flame retardant may include a metal carbonate, such as an alkali metal or alkaline earth metal carbonate. Specific examples of such flame retardants include at least one selected from the group consisting of X₂CO₃(X=Na, K, Rb, Cs), XHCO₃(X=Na, K, Rb, Cs), YCO₃(Y=Be, Mg, Ca, Sr, Ba), and Y(HCO₃)₂(Y=Be, Mg, Ca, Sr, Ba). For example, the flame retardant may include Na₂CO₃, NaHCO₃, CaCO₃, Ca(HCO₃)₂), KHCO₃, or K₂CO₃.

The flame retardant can exhibit flame retardant effects by forming water and carbon dioxide during a thermal decomposition reaction. Specifically, the thermal decomposition reaction can begin at temperatures of 80°C to 100°C. For example, the thermal decomposition reaction of the flame retardant NaHCO₃ is shown in Reaction Scheme 1 below.

[Reaction Scheme 1] 2NaHCO₃(s)→Na₂CO₃(s) + H₂O(g) + CO₂(g)

Additionally, the Na₂CO₃ produced in Reaction Scheme 1 can be thermally decomposed once again to produce carbon dioxide. In this way, NaHCO₃ undergoes two thermal decomposition processes to produce water and carbon dioxide, thereby improving a flame retardant effect.

The third layer comprises a silicone-aerogel composite. The silicone-aerogel composite of the present disclosure may be formed by mixing a silicone resin and an aerogel. For example, a solvent-free liquid silicone resin and aerogel are mixed to form a solid silicone-aerogel composite, and the silicone-aerogel composite is then cured to form the third layer.

Based on the total weight of the third layer comprising the silicone-aerogel composite, the content of aerogel may be 0.5 wt.% or more and 40 wt.% or less, or 15 wt.% or more and 30 wt.% or less, and the content of the silicone resin may be 60 wt.% or more and 99.5 wt.% or less, or 70 wt.% or more and 85 wt.% or less. If the content of aerogel is too low, the aerogel may not sufficiently encapsulate the silicone resin, which may make it difficult to form a silicone-aerogel composite, and also may degrade the thermal insulation properties of the silicone-aerogel composite. If the content of aerogel is too high, it is difficult to form the silicone-aerogel composite into a sheet, which makes it difficult to use as a thermal insulation layer.

Therefore, the third layer of the present disclosure comprises a silicone-aerogel composite. Based on the total weight of the silicone-aerogel composite, the content of aerogel is 0.5 wt.% or more and 40 wt.% or less, and the content of the silicone resin is 60 wt.% or more and 99.5 wt.% or less, and thus can function as a thermal insulation layer. The effects resulting from the composition of the third layer and manufacturing method will be described later.

Meanwhile, the thickness of each of the first layer, the second layer, and the third layer may be 0.1 mm or more and 5 mm or less. The first layer, the second layer, and the third layer may have the same thickness, or at least one may have a different thickness from the others.

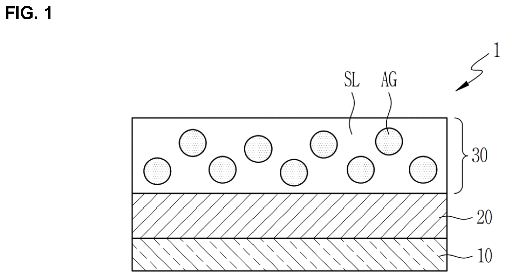

The fire-resistant pad of the present disclosure has a structure in which each of the first layer, the second layer, and the third layer is laminated in at least one layer. The laminated structure of the fire-resistant pad is not particularly limited, and various laminated structures of the fire-resistant pad of the present disclosure will be described below with reference to FIGS. 1 to 6.

FIGS. 1 to 6 each show cross-sectional views of a fire resistant pad according to an embodiment.

Referring to FIG. 1, the fire-resistant pad 1 of an embodiment may have a structure in which a first layer 10, a second layer 20, and a third layer 30 are laminated in this order.

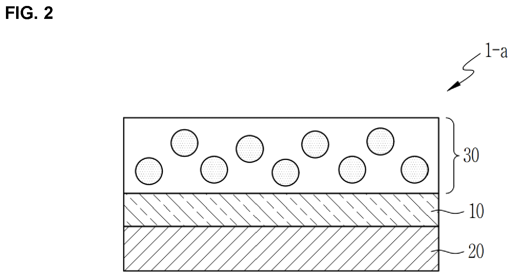

Referring to FIG. 2, the fire-resistant pad 1-a of an embodiment may have a structure in which a second layer 20, a first layer 10, and a third layer 30 are laminated in this order.

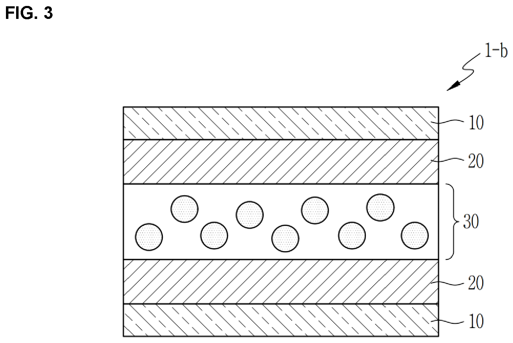

Referring to FIG. 3, the fire-resistant pad 1-b of an embodiment may have a structure in which a first layer 10, a second layer 20, a third layer 30, a second layer 20, and a first layer 10 are laminated in this order.

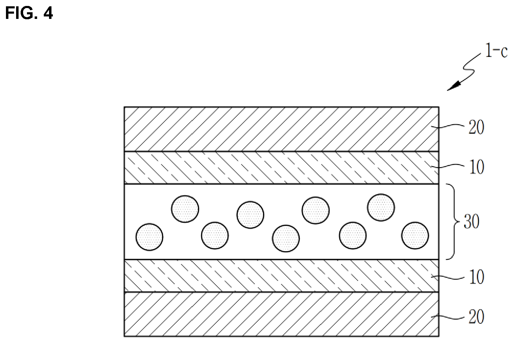

Referring to FIG. 4, the fire-resistant pad 1-c of an embodiment may have a structure in which a second layer 20, a first layer 10, a third layer 30, a first layer 10, and a second layer 20 are laminated in this order.

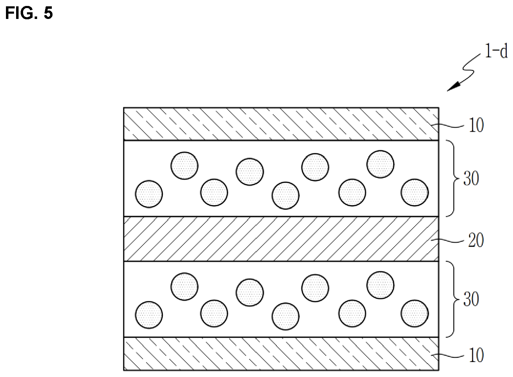

Referring to FIG. 5, the fire-resistant pad 1-d of an embodiment may have a structure in which a first layer 10, a third layer 30, a second layer 20, a third layer 30, and a first layer 10 are laminated in this order.

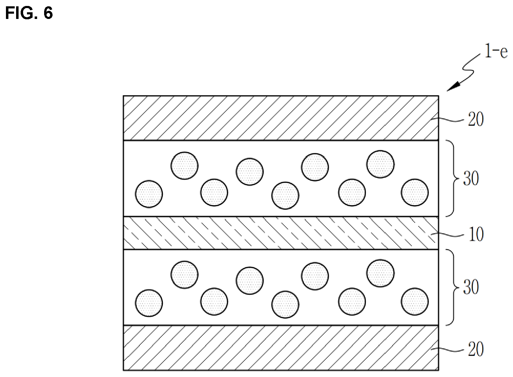

Referring to FIG. 6, the fire-resistant pad 1-e of an embodiment may have a structure in which a second layer 20, a third layer 30, a first layer 10, a third layer 30, and a second layer 20 are laminated in this order.

Meanwhile, FIGS. 1 to 6 are examples, and the fire-resistant pad of the present disclosure may have various laminated structures not disclosed in FIGS. 1 to 6, as long as it includes a first layer 10, a second layer 20, and a third layer 30.

The fire-resistant pad of the present disclosure comprises a first layer 10, a second layer 20, and a third layer 30, and thus can exhibit excellent non-combustibility, flame retardancy, and thermal insulation properties. In particular, the fire-resistant pad comprises the second layer 20 and thus generates non-combustible gases such as CO₂ and water through thermal decomposition of the flame retardant in the case of a fire, thereby improving flame retardant effect and thermal insulation effect.

When the fire-resistant pad of the present disclosure is applied to a secondary battery in the form of a battery pack or the like, the fire-resistant pad can prevent propagation of flames and heat. Specifically, the fire-resistant pad of the present disclosure is disposed between the unit battery cells included in the battery pack, and thus effectively prevent the flame from propagating when thermal runaway occurs within the battery pack. Furthermore, the fire-resistant pad comprises a third layer 30 comprising a silicone-aerogel composite and thus can function as a thermal insulation layer, and minimize heat transfer between the unit cells, thereby preventing heat from concentrating in specific unit cells and preventing thermal runaway from occurring.

For this purpose, the secondary battery may include a plurality of unit cells, while it may include fire-resistant pads formed between some or all of the unit cells that are adjacent to each other among these unit cells. However, such secondary batteries may follow the configuration of conventional secondary batteries or battery packs except for the formation of the fire-resistant pad, and thus, detailed descriptions thereof will be omitted.

Meanwhile, a method for manufacturing the aforementioned fire-resistant pad comprises:
a step of forming a first layer comprising a non-combustible material;
a step of forming a preliminary second layer comprising a carbonate-based flame retardant and a silicone resin;
a step of mixing a liquid solvent-free silicone resin and aerogel particles to form a solid silicone-aerogel composite and forming a preliminary third layer comprising the silicone-aerogel composite;
a step of laminating each of the first layer, the preliminary second layer, and the preliminary third layer in at least one or more layers; and
a step of curing the preliminary second layer and the preliminary third layer to form a second layer and a third layer, respectively.

The step of forming a first layer comprising a non-combustible material is a step of forming the aforementioned first layer on a fire-resistant pad. The first layer may be a non-combustible material and may include at least one of mica fiber, glass fiber, basalt fiber, ceramic paper, and vermiculite-coated fiberglass cloth. For example, the first layer may be ceramic paper, vermiculite-coated fiberglass foil, or a blanket or sheet containing ceramic fiber or ceramic wool. However, embodiments of the first layer are not limited thereto.

The step of forming a preliminary second layer comprising a carbonate-based flame retardant and a silicone resin comprises a step of mixing the carbonate-based flame retardant and the silicone resin.

As previously described, the flame retardant may be a metal carbonate, such as an alkali metal or alkaline earth metal carbonate. More specifically, the flame retardant may be at least one selected from the group consisting of X₂CO₃ (X=Na, K, Rb, Cs), XHCO₃ (X=Na, K, Rb, Cs), YCO₃ (Y=Be, Mg, Ca, Sr, Ba), and Y(HCO₃)₂ (Y=Be, Mg, Ca, Sr, Ba). For example, in the production of the preliminary second layer, Na₂CO₃, NaHCO₃, CaCO₃, Ca(HCO₃)₂, KHCO₃, or K₂CO₃ can be used as the flame retardant.

A specific example of a silicone resin that can be used is vinyl-terminated polydimethylsiloxane resin (PDMS-vinyl terminated, ViMe₂SiO(Me₂SiO)_{X}SiMe₂Vi). A crosslinking agent and a catalyst can be further used for thermal curing of the silicone resin. The crosslinking agent used for thermal curing may be a silicone-based crosslinking agent containing at least one Si-H structure, such as polymethylhydrogen siloxane. A platinum catalyst may be used as the catalyst.

Based on the total weight of the flame retardant and the silicone resin, the content of the flame retardant may be 1 wt.% or more and 60 wt.% or less, and the content of the silicone resin may be 40 wt.% or more and 99 wt.% or less. Based on the total weight of the flame retardant and the silicone resin, the content of the vinyl-terminated polydimethylsiloxane resin may be 40 wt.% or more and 99 wt.% or less, the content of the crosslinking agent may be 0 wt.% or more and 10 wt.% or less, and the content of the catalyst may be 0 wt.% or more and 3 wt.% or less.

For example, based on the total weight of the flame retardant and the silicone resin, the content of the flame retardant may be 30.1 wt.%, the content of the vinyl-terminated polydimethylsiloxane resin may be 68.8 wt.%, the content of the crosslinking agent may be 0.7 wt.%, and the content of the catalyst may be 0.4 wt.%, but the embodiments are not limited thereto.

The carbonate-based flame retardant and the silicone resin may be mixed and then disposed in a layer state to form a preliminary second layer. When the preliminary second layer is cured, the second layer may be formed while the thermosetting silicone resin is being cured. Meanwhile, the curing temperature of the silicone resin can be adjusted so that the flame retardant does not thermally decompose during the curing process of the preliminary second layer. When adjusting the content of the catalyst contained in the silicone resin, it is possible to adjust the temperature at which the silicone resin cures. For example, when the content of the catalyst is 1 wt.%, the curing temperature of the silicone resin is approximately 100°C. However, when the content of the catalyst is 2 wt.% to 3 wt.%, the curing temperature of the silicone resin can be lowered to approximately 70-80°C. Thereby, in the process of curing the preliminary second layer, the silicone resin is cured while the flame retardant is not thermally decomposed, thereby being able to form a second layer.

The step of forming a preliminary third layer comprising the silicone-aerogel composite comprises a step of includes forming a silicone-aerogel composite. In the present disclosure, the silicone-aerogel composite is formed into a solid phase by mixing a liquid, solvent-free silicone resin and aerogel particles.

In an embodiment, the aerogel may be silica gel. In an embodiment, the silicone resin is provided in a solvent-free liquid phase, and may be a solvent-free silicone resin ink. Specific examples of the silicone resin include vinyl-terminated polydimethylsiloxane resin (PDMS-vinyl terminated, ViMe₂SiO(Me₂SiO)_{X}SiMe₂Vi), and may optionally include at least one of a crosslinking agent and a catalyst. The polydimethylsiloxane resin has a siloxane skeleton, contains one or more vinyl groups, and may have a weight average molecular weight of 500 g/mol or more and 100,000 g/mol or less. The crosslinking agent used for thermal curing may be a silicone-based crosslinking agent containing at least one Si-H structure, such as polymethylhydrogen siloxane. A platinum catalyst may be used as the catalyst.

In the mixing process of a silicone resin and an aerogel, the liquid silicone resin is encapsulated by the aerogel having a high specific surface area, thereby forming a solid silicone-aerogel composite. The solid silicone-aerogel composite may, for example, be in the form of a dispersed powder.

The silicone-aerogel composite may contain an aerogel in an amount of 0.5 wt.% or more and 40 wt.% or less, or 15 wt.% or more and 30 wt.% or less, and a silicone resin in an amount of 60 wt.% or more and 99.5 wt.% or less, or 70 wt.% or more and 85 wt.% or less, based on the total weight of the third layer. If the content of aerogel is too low, the aerogel may not sufficiently encapsulate the silicone resin, which may make it difficult to form the silicone-aerogel composite and also degrade the thermal insulation properties of the silicone-aerogel composite. If the content of aerogel is too high, the adhesive properties of the silicone-aerogel composite may deteriorate, which may make it difficult to properly form a third layer.

In an embodiment, based on the total weight of the silicone-aerogel composite, the content of the polydimethylsiloxane resin may be 47 wt.% or more and 99.5 wt.% or less, the content of the crosslinking agent may be 0 wt.% or more and 10 wt.% or less, and the content of the catalyst may be 0 wt.% or more and 3 wt.% or less. This refers to the internal composition of the silicone resin whose content is 60 wt.% or more and 99.5 wt.% or less based on the total weight of the silicone-aerogel composite.

The conventional wet manufacturing process for aerogel composites involve dispersing aerogel in a solvent, impregnating it into a fiber structure, growing the aerogel precursor, and drying the solvent. In this case, it takes approximately 1~3 days to grow the aerogel precursor on the surface of a fiber structure of fiberglass or the like, and subsequently, a process of selectively removing the solvent from the aerogel precursor using methods such as supercritical fluid processing or room temperature pressing is required. As a result, the overall process is time-consuming and costly. In contrast, the present disclosure has the advantage that since a solid aerogel composite is formed by mixing a solvent-free silicone resin (Silicone) with aerogel, the process time is within 10 minutes, and the conventional solvent removal process is omitted, so that the process is simplified compared to the wet manufacturing process, and the time and cost consumed in the process are relatively short.

A silicone-aerogel composite may be disposed in a layer state to form a preliminary third layer. When the preliminary third layer is cured, the third layer may be formed while the thermosetting silicone resin is being cured.

The step of laminating each of the first layer, the preliminary second layer, and the preliminary third layer in at least one or more layers is a step of laminating one or more first layers, one or more preliminary second layers, and one or more preliminary third layers. The laminating order is not particularly limited.

For example, the laminating step of an embodiment may be laminating a first layer, a preliminary second layer, and a preliminary third layer in that order. The laminating step of an embodiment may be laminating a preliminary second layer, a first layer, and a preliminary third layer in that order. The laminating step of an embodiment may be laminating a first layer, a preliminary second layer, a preliminary third layer, a preliminary second layer, and a first layer in that order. The laminating step of an embodiment may be laminating a preliminary second layer, a first layer, a preliminary third layer, a first layer, and a preliminary second layer in that order. The laminating step of an embodiment may be laminating a first layer, a preliminary third layer, a preliminary second layer, a preliminary third layer and a first layer in that order. The laminating step of an embodiment may be laminating a preliminary second layer, a preliminary third layer, a first layer, a preliminary third layer and a preliminary second layer in that order.

The step of curing the preliminary second layer and the preliminary third layer to form a second layer and a third layer, respectively, is a step of curing the preliminary second layer to form a second layer, and curing the preliminary third layer to form a third layer. As previously described, the preliminary second layer and the preliminary third layer include a thermosetting silicone resin, and each layer can be cured through a thermal curing process.

Meanwhile, the steps for curing the preliminary second layer and the preliminary third layer may be performed independently. For example, the preliminary second layer and the preliminary third layer may also be cured simultaneously. In this case, the curing step can be performed after the step of laminating each of the first layer, the preliminary second layer, and the preliminary third layer in at least one layer, and then simultaneously curing the laminated preliminary second layer and preliminary third layer.

In other embodiments, the step of curing the preliminary second layer and the preliminary third layer to form a second layer and a third layer, respectively, may be performed before the laminating step. In this case, in the step of curing the preliminary second layer and the preliminary third layer to form the second layer and the third layer, respectively, the preliminary second layer and the preliminary third layer may be cured at different time points. Subsequently, each of the first to third layers may be laminated in at least one layer. Furthermore, the curing step may be performed during the laminating step, if necessary.

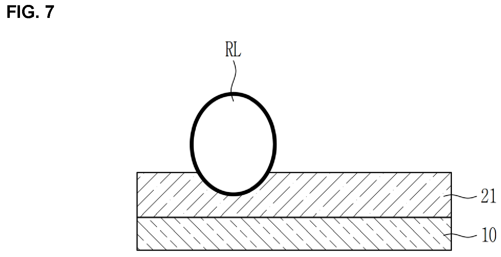

Hereinafter, a method for manufacturing a fire-resistant pad according to an embodiment will be described with reference to FIGS. 7 to 19. FIGS. 7 to 19 each schematically illustrate one step of a method for manufacturing a fire-resistant pad 1 shown in FIG. 1 according to an embodiment. The same explanations as above apply to the first layer 10, the preliminary second layer 21, the second layer 20, the silicone-aerogel composite CM, and the third layer 30 below, and detailed descriptions thereof will be omitted.

FIGS. 7 to 10 schematically illustrate one step of a method for manufacturing a fire-resistant pad according to an embodiment.

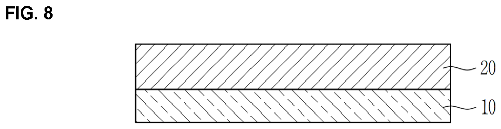

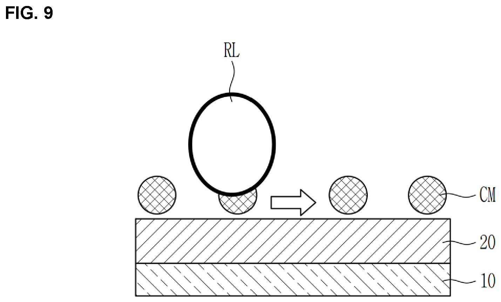

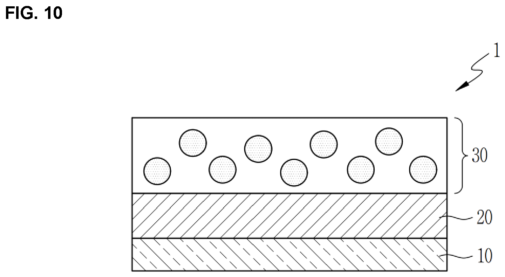

Referring to FIG. 7, a preliminary second layer 21 may be laminated on the first layer 10 using a roll-to-roll process (RL) and simultaneously subjected to thermal curing. Referring to FIG. 8, the preliminary second layer 21 is cured to form the second layer 20. Referring to FIG. 9, a silicone-aerogel composite CM can be applied onto the second layer 20 using a roll-to-roll process RL and simultaneously subjected to thermal curing. Hereinafter, the layer formed by the silicone-aerogel composite CM corresponds to the aforementioned preliminary third layer. Referring to FIG. 10, the silicone-aerogel composite CM is cured to form the third layer 30, thereby manufacturing the fire-resistant pad 1 of an embodiment. As shown in FIGS. 7 to 10, a second layer 20 and a third layer 30 can be sequentially formed on the first layer 10 through a continuous roll-to-roll process. However, the method for manufacturing the fire-resistant pad of an embodiment is not limited thereto.

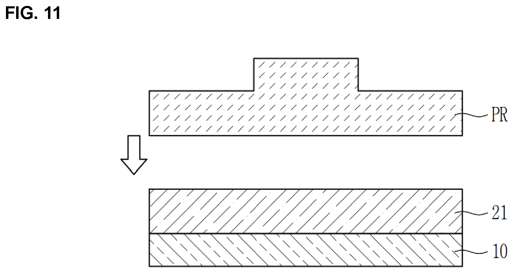

FIGS. 11 to 14 schematically illustrate one step of a method for manufacturing a fire-resistant pad according to an embodiment.

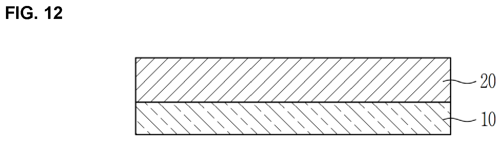

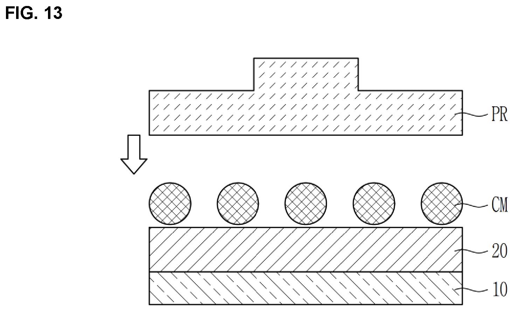

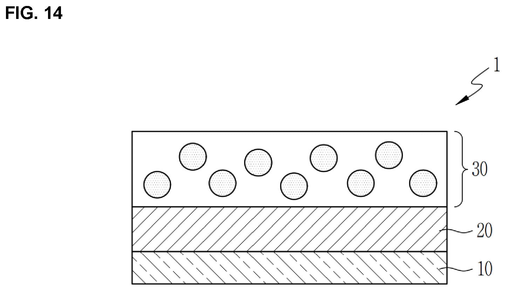

Referring to FIG. 11, a preliminary second layer 21 is laminated on the first layer 10, and then the first layer 10 and the preliminary second layer 21 are thermally compressed using a press (PR) method. Referring to FIG. 12, the preliminary second layer 21 is cured to form the second layer 20. Referring to FIG. 13, a silicone-aerogel composite CM is applied and laminated onto the second layer 20, and then the first layer 10, the second layer 20, and the silicone-aerogel composite CM are thermally compressed using a press (PR) method. Referring to FIG. 14, the silicone-aerogel composite CM is cured to form a third layer 30, thereby manufacturing the fire-resistant pad 1 of an embodiment. As shown in FIGS. 11 to 14, the second layer 20 and the third layer 30 can be sequentially formed on the first layer 10 through a continuous pressing process. However, without being limited thereto, it is also possible to sequentially laminate a preliminary second layer 21 and a silicone-aerogel composite material CM on the first layer 10, and then press and thermally compress them all at once.

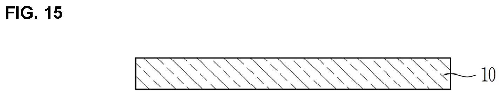

FIGS. 15 to 19 schematically illustrate one step of a method for manufacturing a fire-resistant pad according to an embodiment.

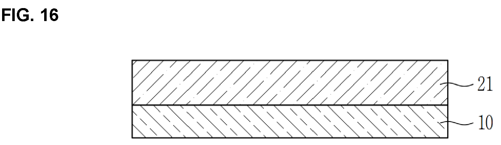

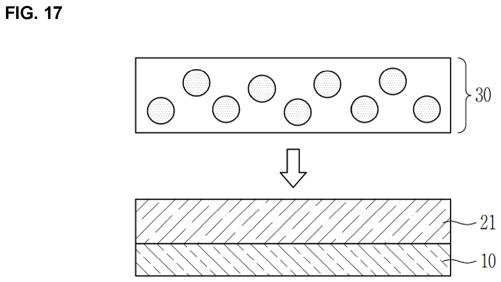

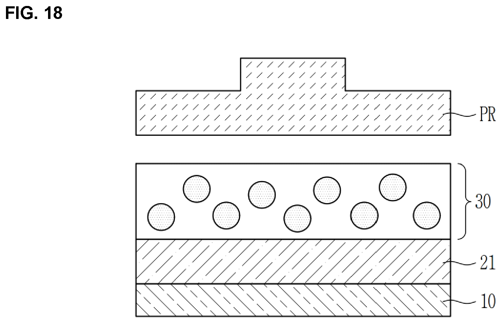

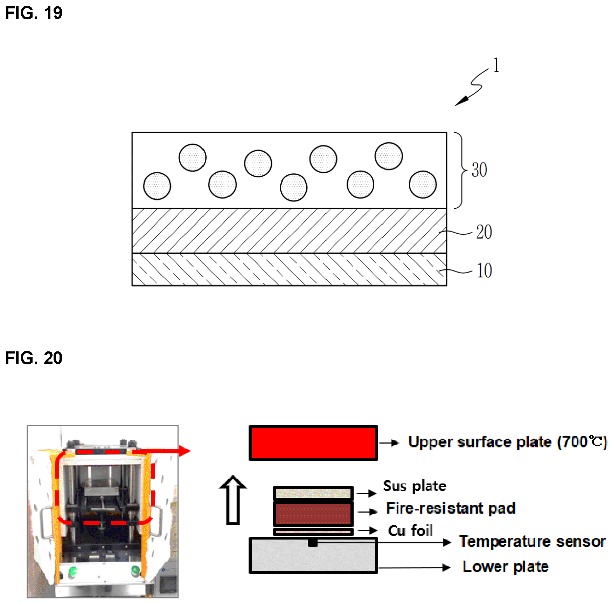

Referring to FIGS. 15 and 16 together, a preliminary second layer 21 may be laminated on the first layer 10 without applying a separate heat to form a fire-resistant pad. Referring to FIG. 17, a third layer 30 that has completed curing may be laminated on the preliminary second layer 21. That is, the curing step of the third layer 30 may be performed before the laminating step of the third layer 30. Subsequently, as shown in FIG. 18, the first layer 10, the preliminary second layer 21, and the third layer 30 can be thermally compressed by press(PR) to cure the preliminary second layer 21. Referring to FIG. 19, the preliminary second layer 21 is cured to form the second layer 20, thereby manufacturing the fire-resistant pad 1 of an embodiment.

While the method for manufacturing a fire-resistant pad according to an embodiment is described with reference to FIGS. 7 to 19, this is merely an example of the manufacturing method, and the method for manufacturing the fire-resistant pad according to the present disclosure is not limited thereto.

The method for manufacturing a fire-resistant pad according to an embodiment of the present disclosure includes the above-mentioned steps and thus can provide a method for manufacturing a fire-resistant pad with excellent fire resistance and thermal insulation properties, and can increase process efficiency.

Hereinafter, various embodiments of the present disclosure will be described in detail so that those skilled in the art can easily carry out them. However, the present disclosure may be modified in various different ways, and is not limited to the embodiments set forth herein.

### 1. Production of the thermal insulation layer (third layer) of Production Examples 1 to 4 and Comparative Production Examples 1 to 4

The thermal insulation layers of Production Examples 1 to 4 and Comparative Production Examples 1 to 4 were produced by the following methods.

### Production Example 1: Production of thermal insulation layer

A solvent-free silicone resin and an aerogel were mixed in a weight ratio of 87.18:12.82 to form a solid silicone-aerogel composite. The silicone resin used was PDMS resin Dowsil^{™} 7272 from Dow, Syl-off^{™} 7028 from Dow was used as a crosslinking agent, and Syl-off^{™} 4000 from Dow was used as the Pt catalyst. The aerogel used was EV5200 from Cabot.

The prepared silicone-aerogel composite was hot-pressed at 150°C and 1.5 kgf/cm² for 30 seconds to form a pad, which was then further heat-cured in an oven at 150°C for 10 minutes to produce a thermal insulation layer of Production Example 1 with a thickness of 0.7 to 2 mm.

### Production Example 2: Production of thermal insulation layer

The thermal insulation layer of Production Example 2 was produced in the same manner as in the thermal insulation layer of Production Example 1, except that the silicone resin and aerogel were mixed in a weight ratio of 83.61:16.39.

### Production Example 3: Production of thermal insulation layer

The thermal insulation layer of Production Example 3 was produced in the same manner as in the thermal insulation layer of Production Example 1, except that the silicone resin and aerogel were mixed in a weight ratio of 80.31:19.69.

### Production Example 4: Production of thermal insulation layer

The thermal insulation layer of Production Example 4 was produced in the same manner as in the thermal insulation layer of Production Example 1, except that the silicone resin and aerogel were mixed in a weight ratio of 75:25.

### Comparative Production Example 1: Production of thermal insulation layer

Only silicone resin was used without aerogel. That is, the thermal insulation layer of Comparative Production Example 1 was produced in the same manner as in the thermal insulation layer of Production Example 1, except that a silicone resin was used instead of the silicone-aerogel composite in Production Example 1.

### Comparative Production Example 2: Production of thermal insulation layer

The thermal insulation layer of Comparative Production Example 2 was produced in the same manner as in the thermal insulation layer of Production Example 1, except that the silicone resin and aerogel were mixed in a weight ratio of 50:50. However, no pad formation of the silicone-aerogel composite was performed.

### Comparative Production Example 3: Production of thermal insulation Layer

The thermal insulation layer of Comparative Production Example 3 was produced in the same manner as in the thermal insulation layer of Production Example 1, except that the silicone resin and aerogel were mixed in a weight ratio of 30:70. However, no pad formation of the silicone-aerogel composite was performed.

### Comparative Production Example 4: Production of thermal insulating layer

A pure aerogel containing 100% aerogel without silicone resin was prepared. It were provided in the form of powder and no pad formation was performed.

### 2. Evaluation of thermal conductivity of thermal insulation layers of Production Examples 1 to 4 and Comparative Production Examples 1 to 4

The thermal conductivity of the thermal insulation layers of Production Examples 1 to 4 and Comparative Production Examples 1 to 4 was evaluated using the TPS method (ISO 2207-2). For Comparative Production Examples 2 to 4, in which pad formation was not performed, the thermal conductivity was measured in powder form.

**[Table 1]**

| Category | Thermal conductivity (mW/m·K) | Propriety of pad formation |
|---|---|---|
| Production Example 1 | 131.9 | O |
| Production Example 2 | 107.2 | O |
| Production Example 3 | 81.9 | O |
| Production Example 4 | 74.5 | O |
| Comparative Production Example 1 | 231 | O |
| Comparative Production Example 2 | 45 | X |
| Comparative Production Example 3 | 40.3 | X |
| Comparative Production Example 4 | 29.3 | X |

Referring to Table 1, it can be confirmed that the thermal insulation layers of Production Examples 1 to 4 exhibit sufficiently low thermal conductivity of about 150 mW/m·K or less, specifically 131.9 mW/m·K or less, and have excellent thermal insulation properties. In particular, the thermal insulation layers of Production Examples 2 to 4 have lower thermal conductivity of about 110 mW/m·K or less, specifically 107.2 mW/m·K or less, and optimized thermal insulation properties as the aerogel content was made to 15 wt.% or more.

Furthermore, it can be confirmed that the thermal insulation layers of Production Examples 1 to 4 contained aerogel in an amount of 0.5 wt.% or more and 40 wt.% or less, or 10 wt.% or more and 30 wt.% or less, and silicone in an amount of 60 wt.% or more and 99.5 wt% or less, or 70 wt.% or more and 90 wt.% or less, thereby having superior thermal insulation performance while achieving pad formation without any deterioration in mechanical properties.

The thermal insulation layer of Comparative Production Example 1 did not contain aerogel and thus exhibited very high thermal conductivity and t is expected that it would be difficult to expect satisfactory thermal insulation performance.

The thermal insulation layers of Comparative Production Examples 2 and 3 had low thermal conductivity despite containing more than 40 wt.% of aerogel, but it did not form into a pad.

The thermal insulation layer of Comparative Production Example 4 is made of 100% aerogel and has very low thermal conductivity, but it exists in powder form and is not made into a pad, so it cannot be used as a fire-resistant pad.

### 3. Example: Manufacturing fire-resistant pad

The thermal insulation layer of Production Example 4 was used as the third layer, and a fire-resistant pad of Example was manufactured by the following method.

First, a blanket containing commercially available ceramic wool (product name: Morgan, Superwool plus) (thickness: 0.1 to 2 mm; non-combustible at ~1200°C under atmospheric pressure) was used as the non-combustible layer (first layer).

Furthermore, a silicone resin (Dowsil^{™} 7272 from Dow), a crosslinking agent (Syl-off^{™} 7028 from Dow), and a platinum catalyst (Syl-off^{™} 4000 from Dow) were primarily mixed. This mixture was then mixed with sodium bicarbonate (NaHCO₃), which is a flame retardant, at a weight ratio of 80:20.

The resulting paste-like mixture was applied onto one surface of the thermal insulation layer (third layer), and the non-combustible layer was laminated on the applied surface.

This laminated structure was heat-treated at 75°C for 1 hour while being pressed at a pressure of 5 kgf/cm². The kneaded mixture was cured, and a flame-retardant layer (second layer) was formed between the thermal insulation layer (third layer) and the non-combustible layer (first layer) to manufacture the fire-resistant pad of Example.

The thermal conductivity of this fire-resistant pad was evaluated in the same manner as in the Production Examples and Comparative Production Examples. As a result, it exhibited a low thermal conductivity of about 98.2 mW/m·K, thereby effectively suppressing heat transfer between unit cells within a secondary battery.

### 4. Evaluation of the heat transfer inhibition characteristics of the fire-resistant pad

For the fire-resistant pad of Example, 7.5 cm x 7.5 cm samples (thickness: 4.31 mm) were prepared. Further, for thermal conductivity comparison, the fire-resistant pad (thickness: 4.06 mm) consisting only of the thermal insulation layer obtained in Production Example 4 was prepared as a sample of the same size and used as Comparative Example 1, and the fire-resistant pad (thickness: 4.4 mm) consisting only of the non-combustible layer used in Example was prepared as a sample of the same size and used as Comparative Example 2.

Using the apparatus shown in FIG. 20, a pressure of 250 kPa was applied while a high temperature of 700°C was applied to the upper surface of each (thermal insulation) pad, and the time required for the temperature of the lower surface of the fire-resistant pad to rise from 40°C to 200°C was measured and evaluated. The evaluation results are shown in Table 2 below.

**[Table 2]**

| | Example | Comparative Example 1 | Comparative Example 2 |
|---|---|---|---|
| Thickness (mm) | 4.31 | 4.06 | 4.4 |
| Time to reach 200°C (sec) | 109.8 | 100.6 | 48.4 |

Referring to Table 2 above, it was confirmed that the fire-resistant pad of Example had superior thermal conductivity suppression properties and required a relatively longer time to reach 200°C compared to the pads of Comparative Examples 1 and 2. This is thought to be because the laminated structure of the non-flammable layer (first layer), flame-retardant layer (second layer), and thermal insulation layer (third layer) enables more effective suppression of high-temperature heat transfer through the interaction of the three layers. In particular, the carbonate-based flame retardant included in the flame-retardant layer (second layer) can generate water and carbon dioxide at temperatures of about 80°C or more, and it appears that this endothermic effect can help suppress heat transfer in the thermal insulation layer, thereby improving the flame-retardant effect.

Furthermore, it is expected that the fire-resistant pad of Example exhibits superior mechanical properties compared to the fire-resistant pad including only the thermal insulation layer of Comparative Example 1, as the thermal insulation layer (third layer) including the aerogel is laminated with other layers.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

1: fire-resistant pad
10: first layer
20: second layer
30: third layer

## Claims

1. A fire-resistant pad comprising:
a first layer comprising a non-combustible material;
a second layer comprising a carbonate-based flame retardant and a silicone resin; and
a third layer comprising a silicone-aerogel composite containing a silicone resin and an aerogel,
wherein the silicone-aerogel composite contains an aerogel in an amount of 0.5 wt.% or more and 40 wt.% or less, based on the total weight of the third layer.

2. The fire-resistant pad according to claim 1, wherein the silicone-aerogel composite contains a silicone resin in an amount of 60 wt.% or more and 99.5 wt.% or less, based on the total weight of the third layer.

3. The fire-resistant pad according to claim 1, wherein the silicone-aerogel composite comprises an aerogel in an amount of 15 wt.% or more and 30 wt.% or less, based on the total weight of the third layer.

4. The fire-resistant pad according to claim 1, wherein the flame retardant comprises an alkali metal or alkaline earth metal carbonate.

5. The fire-resistant pad according to claim 1, wherein the flame retardant is at least one selected from the group consisting of X₂CO₃ (X=Na, K, Rb, Cs), XHCO₃ (X=Na, K, Rb, Cs), YCO₃ (Y=Be, Mg, Ca, Sr, Ba), and Y(HCO₃)₂ (Y=Be, Mg, Ca, Sr, Ba).

6. The fire-resistant pad according to claim 1, wherein the non-combustible material comprises an inorganic material that does not combust at a temperature of 1000°C or less under atmospheric pressure.

7. The fire-resistant pad according to claim 1, wherein the non-combustible material is at least one selected from the group consisting of ceramic paper, ceramic wool, mica sheet, and glass fiber.

8. The fire-resistant pad according to claim 1, wherein the first layer, the second layer, and the third layer are laminated in this order.

9. The fire-resistant pad according to claim 1, wherein the second layer, the first layer, and the third layer are laminated in this order.

10. The fire-resistant pad according to claim 1, wherein the first layer, the second layer, the third layer, the second layer, and the first layer are laminated in this order.

11. The fire-resistant pad according to claim 1, wherein the second layer, the first layer, the third layer, the first layer, and the second layer are laminated in this order.

12. The fire-resistant pad according to claim 1, wherein the first layer, the third layer, the second layer, the third layer, and the first layer are laminated in this order.

13. The fire-resistant pad according to claim 1, wherein the second layer, the third layer, the first layer, the third layer, and the second layer are laminated in this order.

14. The fire-resistant pad according to claim 1, wherein the thickness of each of the first layer, the second layer, and the third layer are 0.1 mm or more and 5 mm or less.

15. A method for manufacturing a fire-resistant pad, the method comprising:
forming a first layer comprising a non-combustible material;
forming a preliminary second layer comprising a carbonate-based flame retardant and a silicone resin;
mixing a liquid solvent-free silicone resin and aerogel particles to form a solid silicone-aerogel composite and forming a preliminary third layer comprising the silicone-aerogel composite;
laminating each of the first layer, the preliminary second layer, and the preliminary third layer in one or more layers; and
curing the preliminary second layer and the preliminary third layer to form a second layer and a third layer, respectively.

16. The method for manufacturing a fire-resistant pad according to claim 15, wherein in the curing the preliminary second layer and the preliminary third layer to form a second layer and a third layer, respectively,
the laminated preliminary second layer and the preliminary third layer are cured simultaneously.

17. The method for manufacturing a fire-resistant pad according to claim 15, wherein the curing the preliminary second layer and the preliminary third layer to form a second layer and a third layer, respectively, is performed before the laminating step.

18. The method for manufacturing a fire-resistant pad according to claim 17, wherein in the curing the preliminary second layer and the preliminary third layer to form a second layer and a third layer, respectively,
the preliminary second layer and the preliminary third layer are cured respectively at different time points.

19. A secondary battery comprising:
a plurality of unit cells; and
a fire-resistant pad according to any one of claims 1 to 14 formed between mutually adjacent unit cells.
